# EUROPEAN PATENT APPLICATION

(11) **EP 4 371 743 A1**
(43) Date of publication of application: **22.05.2024**
(21) Application number: 21950223.4
(22) Date of filing: 16.07.2021
(51) Int. Cl.: B29C 65/48, B29C 45/02, B29C 69/02, F16J 15/10

(54) **MOLDING METHOD**

(71) Applicant: Kokoku Intech Co., Ltd., Taito-ku Tokyo 110-0015 (JP)
(72) Inventor: MITSUTAKE, Yuki, Utsunomiya-shi, Tochigi 321-0905 (JP); HIRAYAMA, Kouji, Utsunomiya-shi, Tochigi 321-0905 (JP)
(74) Representative: Balder IP Law, S.L.
(86) International application number: PCT/JP2021/026896
(87) International publication number: WO 2023/286287

(57) **Abstract**

There is provided a molding method capable of reducing contamination of a base material caused by an adhesive or pressure-sensitive adhesive. A molding method for molding a seal member 172 onto a base material 140 includes: a preforming step of injecting a rubber material 150 into a groove 162 at a temperature where the rubber material 150 is not crosslinked, in a cavity plate 160 including the groove 162 into which the rubber material 150 is injected; a coating step of coating a surface of the rubber material 150 with an adhesive or pressure-sensitive adhesive 600, the rubber material 150 being injected into the groove 162 of the cavity plate 160; and a vulcanization molding step of sandwiching the base material 140 between the cavity plate 160 on which the surface of the rubber material 150 is coated with the adhesive or pressure-sensitive adhesive 600 and a second mold 222, and molding the rubber material 150 onto the base material 140 as the seal member 172 via the adhesive or pressure-sensitive adhesive 600 at a temperature where the rubber material 150 is crosslinked.

## Description

### TECHNICAL FIELD

The present invention relates to a molding method for molding a seal member onto a base material.

### BACKGROUND ART

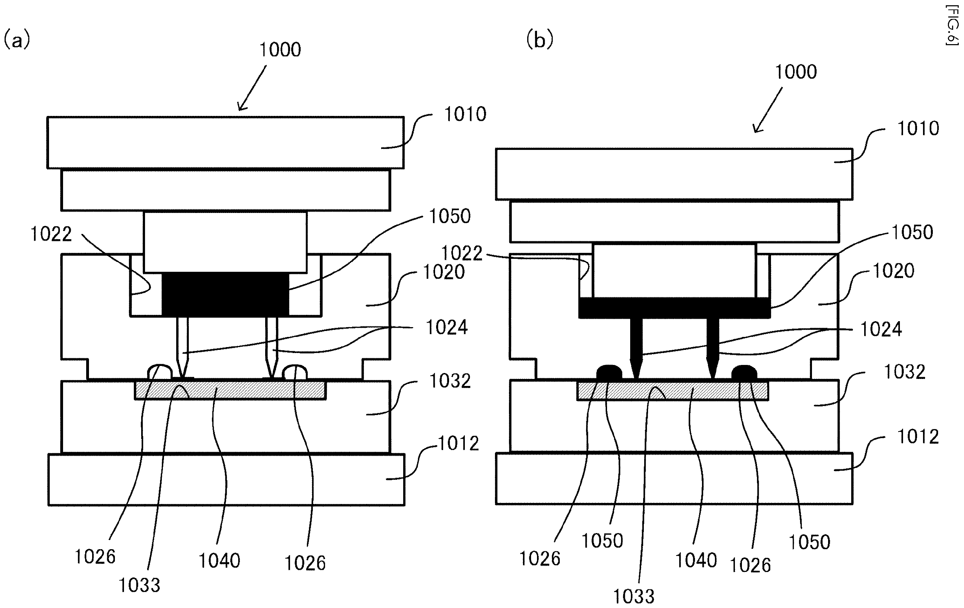

In the related art, a molding method for molding a seal member such as rubber onto a base material such as metal, resin, or paper has been proposed. Fig. 6 is a cross-sectional view of a molding machine 1000 that performs transfer molding of the related art, Fig. 6(a) is a view showing a state where a rubber material 1050 is charged into a pot 1022 of the molding machine 1000, and Fig. 6(b) is a view showing a state where mold clamping and the injection of the rubber material 1050 are performed in the molding machine 1000. The molding machine 1000 includes heating plates 1010 and 1012 and molds 1020 and 1032. The mold 1020 includes the pot 1022 into which the rubber material 1050 is charged; a groove 1026 for molding a seal member onto a base material 1040; and a gate 1024 for injecting the rubber material 1050 into the groove 1026. The mold 1032 includes a recess 1033 in which the base material 1040 is disposed. The molding machine 1000 applies, for example, a pressure (hereinafter, referred to as an injection pressure) of 1 MPa to 200 MPa to the rubber material 1050 by clamping the molds after the rubber material 1050 is charged and the base material 1040 is disposed, and the rubber material 1050 is injected into the groove 1026. The molding machine 1000 molds the seal member onto the base material 1040 such as a separator by crosslinking the rubber material 1050 using, for example, heat at 80°C to 220°C generated by the heating plate 1010.

In addition, for example, Patent Document 1 discloses a method for manufacturing a gasket-integrated plate used for a separator for a fuel cell, a top cover of a hard disk drive, and the like. In addition, adherence between a base material and a seal member may be improved by coating a portion of the base material, onto which the seal member is formed, with an adhesive or pressure-sensitive adhesive.

### CITATION LIST

### PATENT DOCUMENT

Patent Document 1: JP 2004-225721 A

### SUMMARY OF THE INVENTION

### PROBLEM TO BE SOLVED BY THE INVENTION

However, in the molding method of the related art, since the base material is coated with an adhesive or pressure-sensitive adhesive, the adhesive or pressure-sensitive adhesive with which the base material is coated may flow and peel off from the base material due to an injection pressure, so that adhesion or pressure-sensitive adhesion deteriorates, which is a risk. In addition, the adhesive or pressure-sensitive adhesive with which a surface of the base material is coated by direct coating may scatter and contaminate the base material. For this reason, it is required to reduce contamination of the base material caused by the adhesive or pressure-sensitive adhesive during molding of the seal member.

The present invention has been made in view of the above-described circumstances, and an exemplary object of the present invention is to provide a molding method capable of reducing contamination of a base material caused by an adhesive or pressure-sensitive adhesive.

### MEANS FOR SOLVING THE PROBLEM

In order to solve the above-described problems, the present invention has the following configurations.
(1) A molding method for molding a seal member onto a base material includes: a first step of injecting a raw material for the seal member into a groove at a temperature where the raw material is not crosslinked, in a first mold including the groove into which the raw material is injected; a second step of coating a surface of the raw material with an adhesive or a pressure-sensitive adhesive, the raw material being injected into the groove of the first mold; and a third step of sandwiching the base material between the first mold on which the surface of the raw material is coated with the adhesive or the pressure-sensitive adhesive and a second mold, and molding the raw material onto the base material as the seal member via the adhesive or the pressure-sensitive adhesive at a temperature where the raw material is crosslinked.

Further objects or other characteristics of the present invention will become apparent by a preferred embodiment that will be described below with reference to the accompanying drawings.

### ADVANTAGEOUS EFFECTS OF THE INVENTION

According to the present invention, it is possible to provide the molding method capable of reducing contamination of the base material caused by the adhesive or pressure-sensitive adhesive.

### BRIEF DESCRIPTION OF THE DRAWINGS

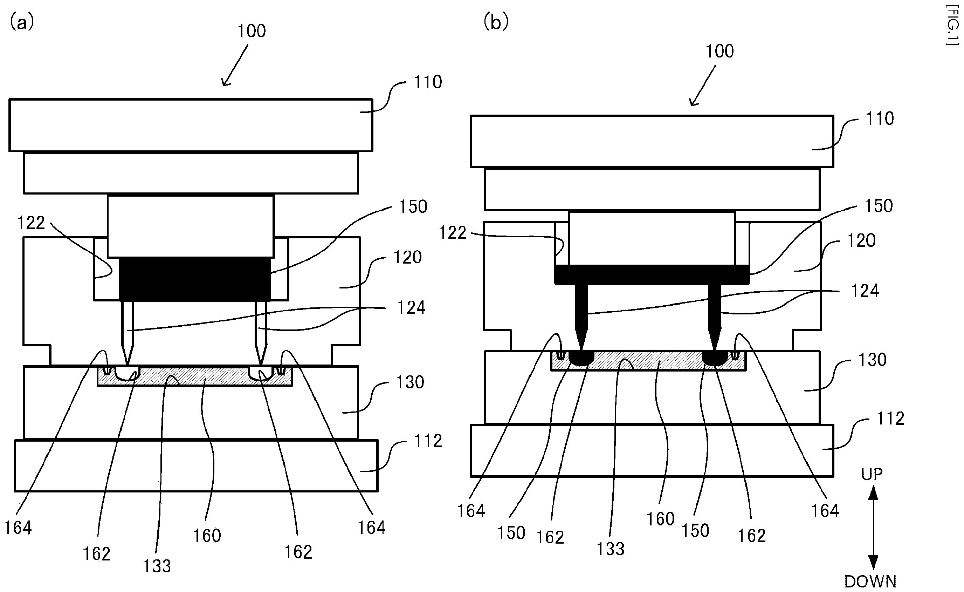

Fig. 1 is a cross-sectional view showing a preforming step of an embodiment, Fig. 1(a) is a view showing a state where a rubber material is charged into a pot of a forming machine, and Fig. 1(b) is a view showing a state where mold clamping and the injection of the rubber material are performed in the forming machine;

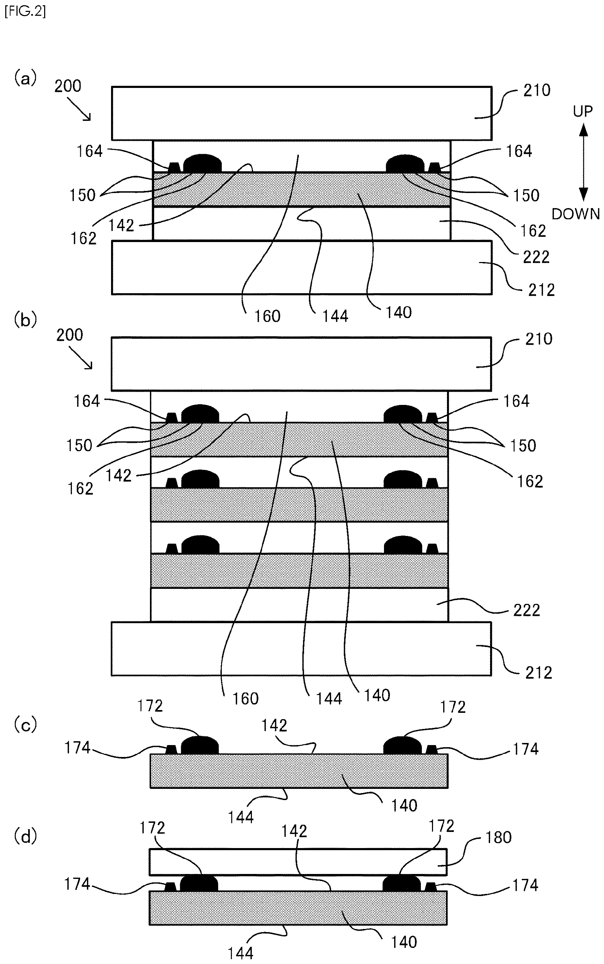

Fig. 2 is a cross-sectional view showing main parts of a molding machine in a vulcanization molding step of the embodiment, Fig. 2(a) is a view showing a state where one pair of a cavity plate and a base material are disposed in the molding machine, Fig. 2(b) is a view showing a state where a plurality of pairs of the cavity plates and the base materials are disposed in the molding machine, Fig. 2(c) is a cross-sectional view showing the base material after molding, and Fig. 2(d) is a view showing a state where an inner region of the base material is sealed by a plate;

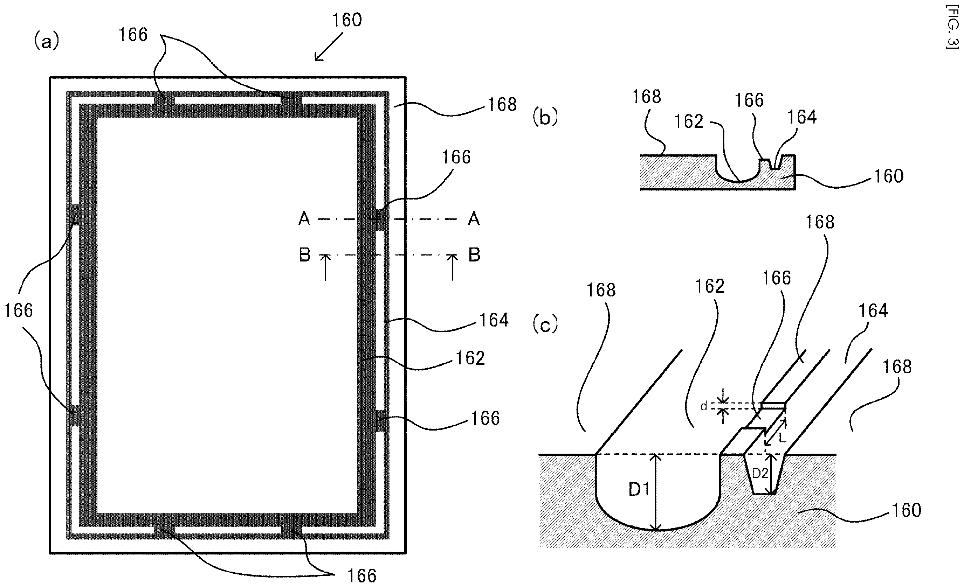

Fig. 3 is a view showing a configuration of the cavity plate of the embodiment, Fig. 3(a) is a view showing a surface of the cavity plate on which a groove is provided, Fig. 3(b) is a cross-sectional view taken along line A-A in Fig. 3(a), and Fig. 3(c) is a perspective view of a cross-section along line B-B in Fig. 3(a);

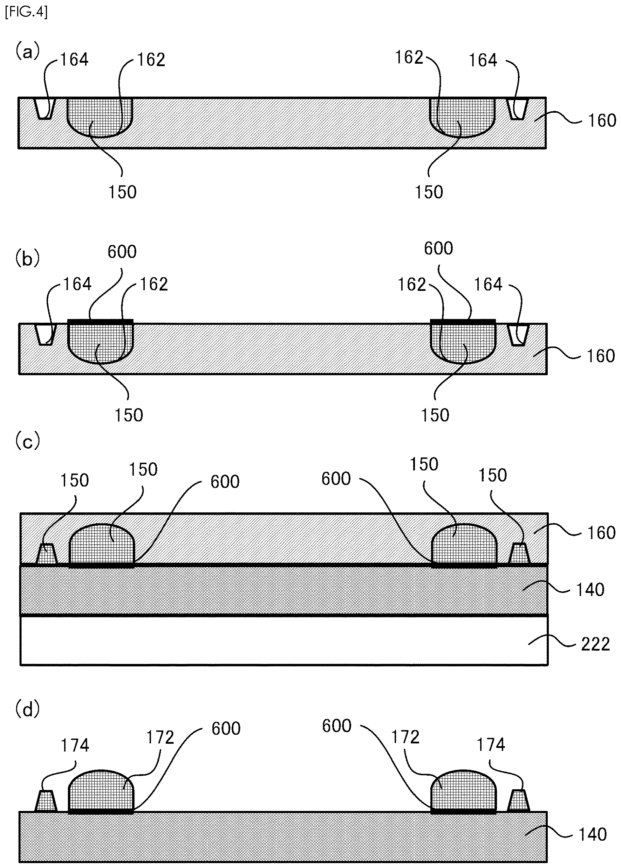

Fig. 4(a) is a cross-sectional view of main parts showing the cavity plate after the preforming step of the embodiment, Fig. 4(b) is a cross-sectional view of main parts showing the cavity plate in which the rubber material injected into the groove is coated with an adhesive or pressure-sensitive adhesive in a coating step, Fig. 4(c) is a cross-sectional view of main parts showing a state where the base material is sandwiched between the cavity plate and a mold in the vulcanization molding step, and Fig. 4(d) is a cross-sectional view of main parts showing the base material on which a seal member is molded after the vulcanization molding step;

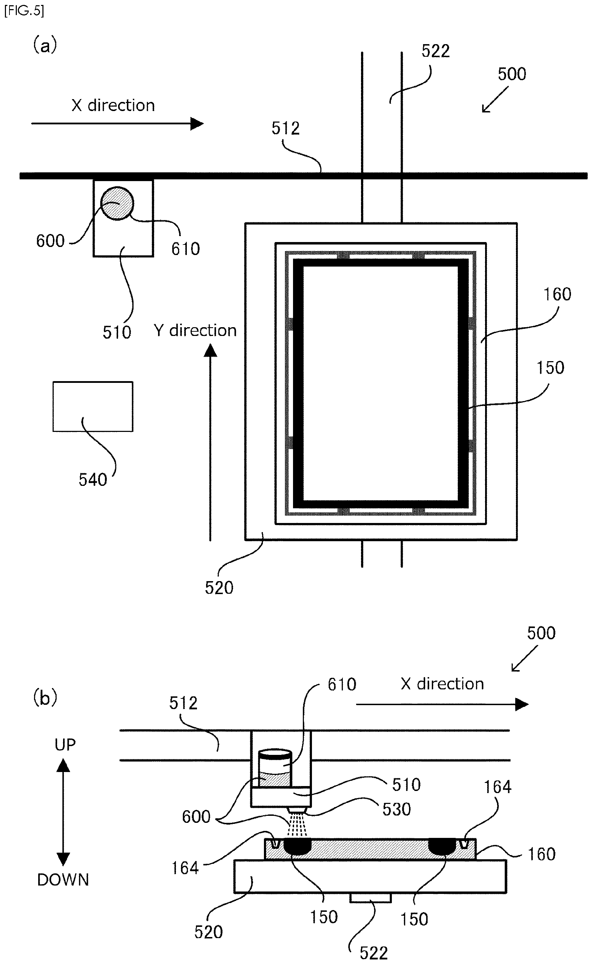

Fig. 5(a) is a top view of main parts showing a configuration of a coating device in the coating step of the embodiment, and Fig. 5(b) is a front view of main parts showing a coating operation by the coating device; and
Fig. 6 is a cross-sectional view of a molding machine in an example of the related art, Fig. 6(a) is a view showing a state where a rubber material is charged into a pot of the molding machine, and Fig. 6(b) is a view showing a state where mold clamping and the injection of the rubber material are performed in the molding machine.

### DESCRIPTION OF THE EMBODIMENTS

Hereinafter, embodiments will be described with reference to the drawings. Here, the term "forming" refers to a step of shaping rubber in an uncrosslinked state regardless of the use of molds, and the term "molding" refers to a step of shaping rubber (crosslinked rubber) by using molds and performing a crosslinking reaction.

### [Embodiment]

### <Flow until base material with seal member is completed>

A basic flow of a molding method of the present embodiment will be described. When the seal member is, for example, rubber, materials for a rubber material are mixed and kneaded. Examples of the rubber used include thermosetting elastic bodies such as fluororubber, EPDM, NBR, CR, silicone, thermoplastic elastic bodies, thermoplastic resins, and the like. Next, vulcanization promoter mixing is performed on the kneaded materials. Here, vulcanization promoter mixing refers to adding, mixing, and kneading a vulcanization accelerator and a vulcanizing agent with a rubber compound. Incidentally, the material in a state where rubber used as a raw material and a compounding agent such as a filler and a crosslinking agent (vulcanizing agent) are uniformly mixed is also referred to as a rubber compound (rubber material). Next, the rubber material on which vulcanization promoter mixing is performed is dispensed and formed, and then the rubber material is injected into a groove of a cavity plate to be described later at a predetermined pressure, and is formed in an unvulcanized (uncrosslinked) state. In the following description, a step of performing forming in an unvulcanized (uncrosslinked) state is referred to as a preforming step.

In the preforming step, vulcanization (crosslinking) is performed in a state where the cavity plate into which the rubber is injected and a base material are laminated to form a pair. In the following description, a step of performing vulcanization (crosslinking) is referred to as a vulcanization molding step. Incidentally, the vulcanization molding step also includes a case where a substance used as a raw material for the seal member is molded onto the base material at a vulcanization (crosslinking) temperature. After the vulcanization (crosslinking) is completed, and for example, secondary vulcanization is performed on the base material onto which the seal member is transferred (molded), finally, finishing, inspection, and the like are performed, a series of work is completed, and the base material with the seal member is completed as a product.

### (Preforming step)

The preforming step that is a first step will be described. Fig. 1 is a cross-sectional view showing a forming machine 100 in the preforming step of the present embodiment, Fig. 1(a) is a view showing a state where a rubber material 150 that is a raw material for the seal member formed onto the base material is charged into a pot 122 of the forming machine 100, and Fig. 1(b) is a view showing a state where the rubber material 150 is injected into a groove 162 of a cavity plate 160 in the forming machine 100. In Fig. 1, an up-down direction is indicated by a double-headed arrow. Incidentally, in Figs. 1 to 3, for the sake of description, it is assumed that the base material is a flat plate and the cavity plate 160 of which the shape is determined according to the base material is a flat plate.

The forming machine 100 includes heating plates 110 and 112 and molds 120 and 130. The mold 120 includes the pot 122 into which the rubber material 150 is charged, and a gate 124 for injecting the rubber material 150 into the groove 162 of the cavity plate 160. The mold 130 includes a recess 133 in which the cavity plate 160 is disposed.

The cavity plate 160 that is a first mold includes the groove 162 into which the rubber material 150 is injected, and a groove (hereinafter, referred to as an escape groove) 164 for the escape of the rubber material 150 from the groove 162 in the preforming step or the vulcanization molding step. In addition, the cavity plate 160 also includes connecting grooves (not shown) to be described later.

In the forming machine 100, as shown in Fig. 1(a), the rubber material 150 is charged into the pot 122, and the cavity plate 160 is disposed in the recess 133 of the mold 130. Incidentally, it is assumed that positioning between the mold 120 (gate 124) and the mold 130 (the groove 162 of the cavity plate 160) is performed by a known method or the like. Thereafter, as shown in Fig. 1(b), a pressure (hereinafter, also referred to as a mold clamping pressure) is applied to the molds 120 and 130 to clamp the molds, and a pressure for injecting the rubber material 150 from the pot 122 via the gate 124 is applied to inject the rubber material 150 into the groove 162 of the cavity plate 160. The pressure required when injecting the rubber material 150 is referred to as an injection pressure, and is, for example, 1 to 200 MPa. In addition, the temperature of heat generated in the heating plates 110 and 112 during mold clamping shown in Fig. 1(b) is a temperature where the rubber material 150 is not vulcanized (crosslinked) (in other words, unvulcanized (uncrosslinked)) (the substance used as a raw material for the seal member is not crosslinked) and fluidity is maintained. For example, in the present embodiment, the preforming step is performed at a temperature of 80°C. In this respect, the preforming step can also be referred to as an unvulcanized forming step. Incidentally, the temperature in the preforming step is not limited to 80°C, and is set depending on, for example, the viscosity of the rubber material 150. The filling rate of the rubber material 150 into the groove 162 of the cavity plate 160 is, for example, 90% to 110%; however, the filling rate is also not limited to this value.

### (Vulcanization molding step)

The vulcanization molding step that is a third step will be described. Fig. 2 is a cross-sectional view showing main parts of a molding machine 200 in the vulcanization molding step of the present embodiment, Fig. 2(a) is a view showing a state where one pair of the cavity plate 160 and a base material 140 are disposed in the molding machine 200, Fig. 2(b) is a view showing a state where a plurality of pairs (for example, three pairs) of the cavity plates 160 and the base materials 140 are disposed in the molding machine 200, Fig. 2(c) is a cross-sectional view showing the base material 140 after molding, and Fig. 2(d) is a view showing a state where an inner region of the base material 140 is sealed by a plate 180. In Fig. 2, the up-down direction is indicated by a double-headed arrow. Incidentally, since a second pair and a third pair have the same configuration as a first pair in Fig. 2(b), reference signs are omitted.

The molding machine 200 includes heating plates 210 and 212 and a second mold 222 (hereinafter, simply referred to as the mold 222). The base material 140 is, for example, metal, resin, or paper. The base material 140 has a surface 142 onto which a seal member 172 is formed, and a surface 144 opposite to the surface 142. The cavity plate 160 in which the rubber material 150 is injected into the groove 162 in the preforming step is aligned with the surface 142 of the base material 140, and the mold 222 is aligned with the surface 144. Namely, the base material 140 is sandwiched between the cavity plate 160 as a mold and the mold 222. Incidentally, it is assumed that positioning between the cavity plate 160 (the groove 162 filled with the rubber material 150) and the base material 140 is performed by a known method or the like.

In this state, heating is performed by the heating plates 210 and 212 at a temperature where the rubber material 150 is vulcanized (crosslinked) (a substance used as a raw material for the seal member is crosslinked), for example, at 120°C to 220°C, and a predetermined pressure (for example, 5 MPa) is applied in the up-down direction. Here, since the injection of the rubber material 150 into the groove 162 is completed in the preforming step, the predetermined pressure does not include the injection pressure but only the mold clamping pressure. In other words, the injection pressure in the vulcanization molding step is 0 MPa. In addition, when the predetermined pressure and heat are applied, the rubber material 150 in the groove 162 escapes into the escape groove 164 via the connecting grooves (not shown) to be described later. Incidentally, the rubber material 150 in the groove 162 may escape to the escape groove 164 during the preforming step.

Incidentally, Fig. 2(a) shows an example in which the vulcanization molding step is performed on one pair of the cavity plate 160 and the base material 140; however, the present invention is not limited thereto. For example, as shown in Fig. 2(b), molding may be performed on a plurality of pairs, for example, three pairs of the cavity plates 160 and the base materials 140 in one vulcanization molding step. In addition, in Fig. 2, the cavity plate 160 is at the top and the base material 140 is at the bottom; however, the top and bottom may be reversed. When the top and bottom are reversed, the mold 222 becomes an upper mold.

As described above, as shown in Fig. 2(c), the rubber material 150 injected into the groove 162 of the cavity plate 160 is transferred (molded) onto the surface 142 of the base material 140 as the seal member 172. In addition, as shown in Fig. 2(d), by aligning the plate 180 to face the surface 142 of the base material 140 on which the seal member 172 is molded, the inner region is sealed by the seal member 172. For example, gas, liquid, or the like is retained in the sealed region. Incidentally, hereinafter, a vulcanized (crosslinked) portion of the rubber material 150 that has escaped to the escape groove 164 is referred to as a side lip 174. Here, in Figs. 1 and 2, the seal member 172 is provided on the surface 142 of the base material 140; however, the seal member 172 may be provided on the surface 144 of the base material 140 or both surfaces (the surface 142 and the surface 144) of the base material 140.

### (Cavity plate)

A configuration of the cavity plate 160 will be described. Fig. 3 is a view showing a configuration of the cavity plate 160, Fig. 3(a) is a view showing a surface (hereinafter, referred to as a touch surface) 168 of the cavity plate 160 on which the groove 162 is provided, Fig. 3(b) is a cross-sectional view taken along line A-A in Fig. 3(a), and Fig. 3(c) is a perspective view of a cross-section along line B-B in Fig. 3(a). The cavity plate 160 includes the groove 162, the escape groove 164, and connecting grooves 166.

As described above, the groove 162 is a groove into which the rubber material 150 is injected. For example, in the present embodiment, it is assumed that the base material 140 has a rectangular shape having two long sides and two short sides and the seal member is molded into a rectangular frame shape along end portions of the base material 140. For this reason, as shown in Fig. 3(a), similarly, the groove 162 of the cavity plate 160 is also provided in a rectangular frame shape. The groove 162 has a predetermined depth D1 (refer to Fig. 3(c)). The depth D1 of the groove 162 determines a height of the seal member molded onto the base material 140. Incidentally, the molding position, length, and width of the seal member on the base material 140 are determined depending on the purpose of use of the base material 140 and/or the seal member, and are not limited to a shape and the like shown in Fig. 3.

The escape groove 164 is provided parallel to and spaced apart from the groove 162, but may not be parallel thereto. The escape groove 164 is a groove for the escape of surplus rubber when the rubber material 150 injected into the groove 162 in the vulcanization molding step (or the preforming step) expands during heating, exceeds the volume of the groove 162, and becomes surplus. Namely, the occurrence of burrs after the vulcanization molding step can be suppressed by providing the escape groove 164. As shown in Fig. 3(a), for example, in the present embodiment, the escape groove 164 is provided between the groove 162 and four sides (end portions) of the cavity plate 160. In the present embodiment, the escape groove 164 is continuously provided, and similarly to the groove 162, has a rectangular frame shape.

Incidentally, the escape groove 164 may be provided discontinuously. In addition, the escape groove 164 is provided at a position where the purpose of use of the base material 140 on which the seal member 172 is molded is not hindered. For example, in the case of the base material 140 onto which the seal member 172 is molded using the cavity plate 160 in Fig. 3(a), the seal member 172 is molded to retain sealability of a region inside the seal member 172 molded by the groove 162. For this reason, in the cavity plate 160, the escape groove 164 is provided at a position corresponding to a region outside the seal member 172 (namely, the end portions of the base material 140), which does not require the retention of sealability.

The escape groove 164 has a predetermined depth D2 (refer to Fig. 3(c)). The depth D2 of the escape groove 164 determines a height of the side lip 174. Here, the depth D2 of the escape groove 164 is shallower than the depth D1 of the groove 162 (D2 < D1). In other words, the height of the side lip 174 is lower than the height of the seal member 172. This is intended to retain sealability of the region inside the seal member 172 when the plate 180 is aligned with the base material 140 by making the height of the seal member 172 higher than the height of the side lip 174 (refer to Fig. 2(d)). The depth D2 of the escape groove 164, whether the escape groove 164 is continuous or discontinuous, or the length, width, shape, and the like when the escape groove 164 is discontinuous are not limited to those shown in Fig. 3, and may be set depending on the purpose of use of the base material 140 and/or the seal member 172 or the viscosity, injection amount, injection pressure, and the like of the rubber material 150.

The connecting grooves 166 are grooves through which the rubber material 150 expanded by heat in the vulcanization molding step (or the preforming step) escapes into the escape groove 164. The connecting grooves 166 have, for example, a depth d of approximately 0.005 mm to approximately 0.2 mm and a length L of approximately 1 to 6 mm, and are formed to be lower than the touch surface 168. Here, the length L is a length in a direction parallel to the groove 162. Incidentally, the depth d of the connecting grooves 166 is shallower than the depth D1 of the groove 162 and the depth D2 of the escape groove 164 (d < D2 < D1) .

As shown in Fig. 3(a), the connecting grooves 166 are discretely provided between the groove 162 and the escape groove 164. The positions where the connecting grooves 166 are provided, the number, width (in other words, a distance between the groove 162 and the escape groove 164), the length L, and the depth d of the connecting grooves 166 may be set depending on the purpose of use of the base material 140 and/or the seal member 172, the configurations of the groove 162 and the escape groove 164, the viscosity of the rubber material 150, the position of the gate 124, or the like.

For example, metals such as iron, SUS, aluminum, and copper that can withstand a temperature during vulcanization (hereinafter, referred to as a vulcanization (crosslinking) temperature) in the vulcanization molding step and that have good thermal conductivity are suitable for the material of the cavity plate 160. In addition, as the material of the cavity plate 160, for example, ceramic, resin, or the like can also be used as long as these materials satisfy the above-described conditions. In addition, it is assumed that the cavity plate 160 has such a thickness that deformation is prevented and rigidity is maintained in the preforming step and the vulcanization molding step.

Since the volumes of the groove 162 and the escape groove 164 of the cavity plate 160 are known values at the time of designing the cavity plate 160, the amount of surplus rubber can be controlled by the escape groove 164, and the occurrence of burrs can be reduced. In addition, since the injection of the rubber material 150 is performed in the preforming step, no injection pressure is applied when the rubber material 150 is molded onto the base material 140 in the vulcanization molding step. For this reason, deformation or damage of the base material 140 caused by the injection pressure can be reduced. In addition, since the injection pressure is not applied in the vulcanization molding step, the pressure added to the mold clamping pressure to suppress the occurrence of burrs in the related art can be reduced. Further, for example, gate marks remain in transfer molding, injection molding, or the like; however, in the preforming step of the present embodiment, since the rubber material 150 is injected into the groove 162 of the cavity plate 160 in an unvulcanized state, gate marks can be reduced or eliminated.

### <Coating step>

The molding method including a coating step that is a second step of the present embodiment will be described using Fig. 4. Fig. 4(a) is a cross-sectional view of main parts showing the cavity plate 160 after the preforming step described in Fig. 1, and Fig. 4(b) is a cross-sectional view of main parts showing the cavity plate 160 in which the rubber material 150 injected into the groove 162 is coated with an adhesive or pressure-sensitive adhesive 600 in the coating step of the present embodiment. In addition, Fig. 4(c) is a cross-sectional view of main parts showing a state where the base material 140 is sandwiched between the cavity plate 160 and the mold 222 in the vulcanization molding step described in Fig. 2, and Fig. 4(d) is a cross-sectional view of main parts showing the base material 140 on which the seal member 172 is molded after the vulcanization molding step. Incidentally, in Fig. 4, for the sake of description, the adhesive or pressure-sensitive adhesive 600 is depicted to have a thickness; however, actually, a thickness of the adhesive or pressure-sensitive adhesive 600 is, for example, 0.01 to 200 µm. In addition, the cavity plate 160, the base material 140, and the like have the same configurations as the configurations described in Figs. 1 to 3, and reference signs and lead lines for some portions of Fig. 4 are omitted. Further, since the adhesive or pressure-sensitive adhesive 600 is shown in black, the rubber material 150, the seal member 172, and the side lip 174 are shown with grid-pattern hatching.

As shown in Fig. 4(a), the groove 162 of the cavity plate 160 is filled (injected) with the rubber material 150 by injection. Incidentally, the rubber material 150 does not escape into the escape groove 164 in Fig. 4(a); however, during the preforming step, the rubber material 150 may escape thereinto via the connecting grooves 166 (refer to Fig. 3).

In the present embodiment, when the preforming step is completed, the process proceeds to the coating step. In the coating step, for example, the coating of the adhesive or pressure-sensitive adhesive 600 is performed by a coating device (not shown). In the present embodiment, the coating of the adhesive or pressure-sensitive adhesive 600 by the coating device is not performed on the base material 140 but on the cavity plate 160. Specifically, the coating device coats the portion of the rubber material 150 injected into the groove 162 of the cavity plate 160, namely, a surface of the rubber material 150 injected into the groove 162 (an exposed portion of the rubber material 150 in the groove 162) with the adhesive or pressure-sensitive adhesive 600.

Incidentally, in the coating step, the coating of the adhesive or pressure-sensitive adhesive 600 may be performed by replacing components above the mold 120 with the coating device in a state where the cavity plate 160 is disposed in the forming machine 100 after the preforming step. In addition, before the vulcanization molding step, in a state where the cavity plate 160 is disposed in the molding machine 200, the coating of the adhesive or pressure-sensitive adhesive 600 may be performed by the coating device before the base material 140 is superimposed on the cavity plate 160. Further, between the preforming step and the vulcanization molding step, the coating of the adhesive or pressure-sensitive adhesive 600 may be performed in a state where the cavity plate 160 is removed from the forming machine 100 and is disposed in the coating device. As shown in Fig. 4(b), the rubber material 150 injected into the groove 162 of the cavity plate 160 after the preforming step may be coated with the adhesive or pressure-sensitive adhesive 600, and the method is not limited to the above-described methods.

In Fig. 4(c), the vulcanization molding step is performed in a state where the rubber material 150 injected into the groove 162 of the cavity plate 160 is coated with the adhesive or pressure-sensitive adhesive 600. As shown in Fig. 4(d), the seal member 172 is more firmly transferred (molded) onto the base material 140 by the adhesive or pressure-sensitive adhesive 600.

### <Coating device for adhesive>

A coating device that automatically coats the rubber material 150 with the adhesive or pressure-sensitive adhesive 600, the rubber material 150 being injected into the groove 162 of the cavity plate 160, will be described. The coating device is, for example, a spray gun, a dispenser, a coater, a printer, or the like. Incidentally, when there is a risk that the coating device coats an unnecessary region with the adhesive or pressure-sensitive adhesive 600, for example, a method such as masking may be used to prevent the unnecessary coating of the adhesive or pressure-sensitive adhesive 600. Here, the printer is, for example, an inkjet printer.

Here, an example in which an inkjet printer is used as a coating device 500 will be described using Fig. 5. Fig. 5(a) is a top view of main parts showing a configuration of the coating device 500 in the coating step, and Fig. 5(b) is a front view of main parts showing a coating operation by the coating device 500. Fig. 5(b) is shown in the up-down direction. Incidentally, in Fig. 5, some of the reference signs described up to now are omitted. The coating device 500 includes a head 510, a table 520, rails 512 and 522, and a control unit 540. The head 510 includes a nozzle 530 on the lower side. A bottle 610 containing the adhesive or pressure-sensitive adhesive 600 is placed in the head 510, and supplies the adhesive or pressure-sensitive adhesive 600 to the nozzle 530 via a tube (not shown). The nozzle 530 is provided with a plurality of holes (not shown) that eject the adhesive or pressure-sensitive adhesive 600 toward the lower side supplied from the bottle 610. The head 510 is movable along the rail 512 at a predetermined speed. A movement direction of the head 510 is, hereinafter, an X direction.

The table 520 is a stand on which the cavity plate 160 that has undergone the completion of the preforming step is placed. The cavity plate 160 that has undergone the completion of the preforming step is placed on the table 520 such that the rubber material 150 faces upward. The table 520 is movable along the rail 522 at a predetermined speed. A movement direction of the table 520 is, hereinafter, a Y direction. The cavity plate 160 is positioned on the table 520 by a known method, and is fixed by a known method such that the cavity plate 160 does not move during movement of the table 520.

The control unit 540 includes various means for controlling the coating device 500, such as a CPU (not shown), a ROM (not shown), a RAM (not shown), a timer (not shown), and a counter (not shown). The control unit 540 controls the position and movement speed of the head 510, the position and movement speed of the table 520, the ejection amount of the adhesive or pressure-sensitive adhesive 600 from the nozzle 530, the ejection timing, and the like using a known method.

Since the position of the groove 162 of the cavity plate 160 shown in Fig. 3(a) is already known when the cavity plate 160 is designed, position information of the groove 162 is obtained in advance. For this reason, the coating operation of the adhesive or pressure-sensitive adhesive 600 is controlled by the control unit 540 included in the coating device 500, based on the position information of the groove 162 of the cavity plate 160. For example, when the coating device 500 is an inkjet printer, the position where the coating of the adhesive or pressure-sensitive adhesive 600 is performed can be controlled. For this reason, when an inkjet printer is used as the coating device 500, a masking process or the like is unnecessary, so that coating by the inkjet printer is preferable.

### (Adhesive)

The adhesive or pressure-sensitive adhesive 600 is not particularly limited as long as the adhesive or pressure-sensitive adhesive 600 contains components that do not react with the cavity plate 160 in the vulcanization molding step.

The coating area of the adhesive or pressure-sensitive adhesive 600 may be determined depending on the use of the base material 140. For example, when emphasis is placed on adhesion or pressure-sensitive adhesion of the seal member 172, the coating of the adhesive or pressure-sensitive adhesive 600 may be performed such that the coating area becomes more than or equal to the area of the groove 162 shown in Fig. 3(a). On the other hand, when emphasis is placed on the prevention of contamination of the cavity plate 160 and/or the base material 140, coating may be performed such that the coating area becomes less than the area of the groove 162. The same applies to the coating amount of the adhesive or pressure-sensitive adhesive 600.

In this manner, the base material 140 is prevented from being contaminated by coating the rubber material 150 with the adhesive or pressure-sensitive adhesive 600 in the coating step, the rubber material 150 being injected into the groove 162 of the cavity plate 160. In addition, when the adhesive or pressure-sensitive adhesive 600 is dried or in a baking or residue removal step after molding, the contamination of the seal member 172 can be prevented.

As described above, according to the present embodiment, it is possible to provide the molding method capable of reducing contamination of the base material caused by the adhesive or pressure-sensitive adhesive.

The preferred embodiment of the present invention has been described above; however, the present invention is not limited thereto, and various modifications or changes can be made without departing from the concept of the present invention.

In the above-described embodiment, the configuration in which the cavity plate 160 includes the escape groove 164 and the connecting grooves 166 have been described; however, the cavity plate may not include the escape groove and the connecting groove, and the rubber material 150 may be injected into the groove 162 of the cavity plate in the preforming step.

In the above-described embodiment, the case where the seal member 172 is molded onto the base material 140 that is flat has been described; however, the shape of the base material 140 may be other shapes. For example, the present invention can also be applied to a base material having a flange shape at an end portion, a base material having an uneven shape, or the like. In addition, the present invention can also be applied to a case where the seal member 172 is molded onto both surfaces of the base material 140.

In addition, for example, the present invention includes the following concepts.

### [Concept 1]

A molding method of the present invention is a molding method for molding a seal member onto a base material, the method including: a first step of injecting a raw material for the seal member into a groove at a temperature where the raw material is not crosslinked, in a first mold including the groove into which the raw material is injected; a second step of coating a surface of the raw material with an adhesive or a pressure-sensitive adhesive, the raw material being injected into the groove of the first mold; and a third step of sandwiching the base material between the first mold on which the surface of the raw material is coated with the adhesive or the pressure-sensitive adhesive and a second mold, and molding the raw material onto the base material as the seal member via the adhesive or the pressure-sensitive adhesive at a temperature where the raw material is crosslinked.

### [Concept 2]

In the second step, the coating of the adhesive or the pressure-sensitive adhesive may be performed by an inkjet coating device.

### [Concept 3]

The first mold may include an escape groove in the vicinity of the groove and spaced apart from the groove.

### [Concept 4]

The first mold may include a connecting groove connecting the groove and the escape groove.

### [Concept 5]

The base material may be metal, resin, or paper.

### [Concept 6]

The seal member may be rubber.

### REFERENCE SIGNS LIST

100: forming machine
200, 1000: molding machine
110, 112, 210, 212, 1010, 1012: heating plate
120, 130, 1020, 1032: mold
122, 1022: pot
124, 1024: gate
133, 1033: recess
140, 1040: base material
142, 144: surface
150, 1050: rubber material
160: cavity plate
162, 1026: groove
164: escape groove
166: connecting groove
168: touch surface
172: seal member
174: side lip
180: plate
222: second mold
500: coating device
510: head
512, 522: rail
520: table
530: nozzle
540: control unit
600: pressure-sensitive adhesive
610: bottle

## Claims

1. A molding method for molding a seal member onto a base material, the method comprising:
a first step of injecting a raw material for the seal member into a groove at a temperature where the raw material is not crosslinked, in a first mold including the groove into which the raw material is injected;
a second step of coating a surface of the raw material with an adhesive or a pressure-sensitive adhesive, the raw material being injected into the groove of the first mold; and
a third step of sandwiching the base material between the first mold on which the surface of the raw material is coated with the adhesive or the pressure-sensitive adhesive and a second mold, and molding the raw material onto the base material as the seal member via the adhesive or the pressure-sensitive adhesive at a temperature where the raw material is crosslinked.

2. The molding method according to claim 1,
wherein in the second step, the coating of the adhesive or the pressure-sensitive adhesive is performed by an inkjet coating device.

3. The molding method according to claim 1 or 2,
wherein the first mold includes an escape groove in the vicinity of the groove and spaced apart from the groove.

4. The molding method according to any one of claims 1 to 3,
wherein the first mold includes a connecting groove connecting the groove and the escape groove.

5. The molding method according to any one of claims 1 to 4,
wherein the base material is metal, resin, or paper.

6. The molding method according to any one of claims 1 to 5,
wherein the seal member is rubber.
